# EUROPÄISCHE PATENTANMELDUNG

(11) **EP 1 296 433 A2**
(43) Veröffentlichungstag der Anmeldung: **26.03.2003**
(21) Anmeldenummer: 02020807.0
(22) Anmeldetag: 17.09.2002
(51) Int. Cl.: H02H 9/02

(54) **Schaltungsanordnung zur Spannungsversorgung eines Zweidrahtsensors**

(30) Priorität: 19.09.2001 DE 10146204
(71) Anmelder: VEGA Grieshaber KG, 77709 Wolfach (DE)
(72) Erfinder: Körnle, Ralf, 77736 Zell a.H. (DE); Wöhrle, Albert, 78733 Aichhalden/Rötenbach (DE); Motzer, Jürgen, 77723 Gengenbach (DE)
(74) Vertreter: Patentanwälte Westphal, Mussgnug & Partner

(57) **Zusammenfassung**

Ein Zweidrahtsensor (S) ist über eine erste Verbindungsleitung (V1), in der ein Strombegrenzungswiderstand (R1) liegt, an den einen Pol und über eine zweite Verbindungsleitung (V2) an den anderen Pol einer Versorgungsspannungsquelle (U) angeschlossen. Parallel zur Reihenschaltung aus dem Zweidrahtsensor (S) und dem Strombegrenzungswiderstand (R1) liegt mindestens eine Begrenzungsdiode (D1). Ein Stromregler (SR), der an die Pole der Versorgungsspannungsquelle (U) angeschlossen ist, regelt einen Parallelstrom (I), der parallel zum Strom durch den Zweidrahtsensor (D) fließt so, dass sich an den Polen der Versorgungsspannungsquelle (U) ein Summenstrom ergibt, der stets dem vom Zweidrahtsensor (S) gelieferten Messwert entspricht. Die Stelleingänge des Stromreglers (SR) sind mit den Anschlüssen eines in einer Verbindungsleitung (V1) liegenden Stromfühlwiderstandes (R2) verbunden. Bei Einsatz eines Zweidrahtsensors (S) mit einer HART®-Schnittstelle liegt in einer der beiden Verbindungsleitungen (V1) ein HART®-Widerstand (RH).

## Beschreibung

Schaltungsanordnung zur Spannungsversorgung eines Zweidrahtsensors.

Die Erfindung betrifft eine Schaltungsanordnung zur Spannungsversorgung eines Zweidrahtsensors, der über eine erste Verbindungsleitung, in der ein Strombegrenzungswiderstand liegt, an den einen Pol und über eine zweite Verbindungsleitung an den anderen Pol einer Versorgungsspannungsquelle angeschlossen ist, wobei parallel zum Zweidrahtsensor und dem Strombegrenzungswiderstand mindestens eine Begrenzungsdiode liegt.

Zweidrahtsensoren sind aus einem Messsensor, der eine physikalische Größe, wie zum Beispiel die Temperatur, den Druck oder die Feldstärke eines Magnetfeldes mißt, und elektronischen Bauteilen zur Verarbeitung der vom Messsensor gelieferten Signale aufgebaut. Sowohl die Stromversorgung als auch die Weiterleitung der gemessenen und verarbeiteten Messsignale erfolgt über nur zwei Leitungen, worauf der Name Zweidrahtsensor zurückzuführen ist. Ein Zweidrahtsensor hat deshalb nur zwei Anschlüsse, die gleichzeitig der Stromversorgung und der Weiterleitung der gemessenen und verarbeiteten Messsignale dienen.

Zweidrahtsensoren, die in explosionsgefährdeten Bereichen eingesetzt werden, sind zur Verhütung von Explosionen mit einer Schaltungsanordnung zur Strom- und Spannungsbegrenzung - einer sogenannten elektrischen Barriere - ausgerüstet. Zum Schutz vor möglicherweise eine Zündung auslösenden Überspannungen sind die beiden Verbindungsleitungen über mindestens eine Begrenzungsdiode miteinander verbunden. Zum Schutz des Sensors vor zu hohen Strömen, die eine zu große Erwärmung im Sensor hervorrufen könnten, wird in die Leitung nach der Begrenzungsdiode ein Serienwiderstand eingesetzt.

Mit einer sogenannten HART®-Schnittstelle ausgerüstete Zweidrahtsensoren erfordern jedoch einen sogenannten HART®-Widerstand vorgeschriebenen Wertes in einer der beiden von der Versorgungsspannungsquelle zum Zweidrahtsensor führenden Verbindungsleitungen. Dieser zusätzliche Widerstand in einer der Verbindungsleitungen kann bei stark belastetem Zweidrahtsensor dazu führen, dass die Versorgungsspannung für einen fehlerfreien Betrieb des Zweidrahtsensors nicht mehr ausreicht.

Es ist daher Aufgabe der Erfindung, eine Schaltungsanordnung zur Spannungsversorgung eines Zweidrahtsensors so zu gestalten, dass einerseits Überspannungen und Überströme sicher vermieden, andererseits aber stets eine ausreichende Versorgungsspannung zur Verfügung steht.

Die Erfindung löst diese Aufgabe mit den im Anspruch 1 angegebenen Merkmalen dadurch, dass die beiden Pole der Versorgungsspannungsquelle über einen Stromregler mit einander verbunden sind und dass in einer der beiden Verbindungsleitungen ein Stromfühler liegt, dessen Anschlüsse mit den Stelleingängen des Stromreglers verbunden sind.

Der erfindungsgemäß vorgesehene Stromregler regelt einen Parallelstrom, der parallel zum durch den Zweidrahtsensor fließenden Strom fließt so, dass sich an den Polen der Versorgungsspannungsquelle immer der dem vom Zweidrahtsensor erfaßten Messwert entsprechende Summenstrom ergibt. Der Zweidrahtsensor ist so parametriert, dass sich das erforderliche Verhältnis des Summenstromes zum Messwert einstellt. Als Stromfühler dient vorzugsweise ein Widerstand.

Die Erfindung wird anhand der Figuren näher beschrieben und erläutert.

In der Zeichnung zeigen:
- Figur 1: ein Blockschaltbild eines ersten Ausführungsbeispieles der Erfindung und
- Figur 2: ein Schaltbild eines zweiten Ausführungsbeispieles der Erfindung.

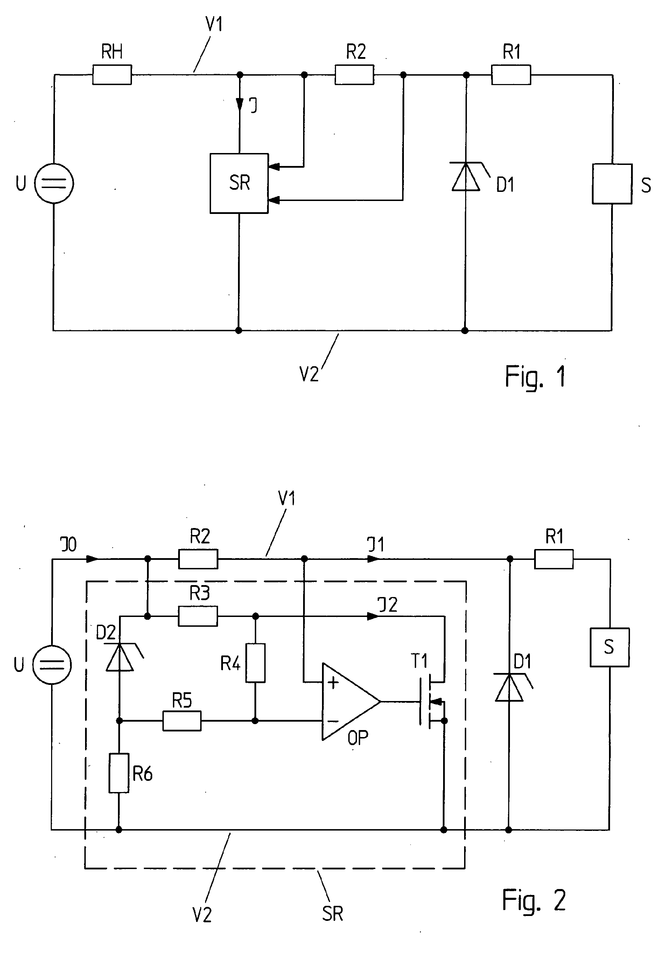

In der Figur 1 ist ein Blockschaltbild eines ersten Ausführungsbeispieles der Erfindung abgebildet.

Der eine Pol einer Versorgungsspannungsquelle U ist über eine Reihenschaltung aus einem HART®-Widerstand RH, einem Stromfühlwiderstand R2 und einem Strombegrenzungswiderstand R1 mit dem einen Eingang eines Zweidrahtsensors S verbunden, dessen anderer Eingang über eine Verbindungsleitung V2 mit dem anderen Pol der Versorgungsspannungsquelle U verbunden ist. Der HART®-Widerstand RH, der Stromfühlwiderstand R2 und der Strombegrenzungswiderstand R1 liegen in einer Verbindungsleitung V1 in Reihe. Ein Stromregler SR, dessen Stelleingänge mit den Anschlüssen des Stromfühlwiderstandes R2 verbunden sind, liegt zwischen dem gemeinsamen Knoten des HART®-Widerstandes RH und der Verbindungsleitung V2. Parallel zur Reihenschaltung aus dem Strombegrenzungswiderstand R1 und dem Zweidrahtsensor S liegt eine Begrenzungsdiode D1. Die Funktion des Stromfühlwiderstandes R2 kann auch der Strombegrenzungswiderstand R1 übernehmen. Bei dieser Ausgestaltung der Erfindung entfällt der Stromfühlwiderstand R2. Die Stelleingänge des Stromreglers SR sind mit den Anschlüssen des sowohl als Begrenzungswiderstand als auch als Stromfühlwiderstand dienenden Widerstandes R1 verbunden.

Wie bereits erwähnt, regelt der Stromregler SR den Parallelstrom I, der parallel zu dem den Zweidrahtsensor S durchfließenden Strom fließt so, dass sich an den Polen der Versorgungsspannungsquelle U stets der dem vom Zweidrahtsensor S ermittelten Messwert entsprechende Summenstrom ergibt. Der Zweidrahtsensor S ist hierfür passend parametriert.

Der erfindungsgemäße Stromregler SR schützt in Zusammenwirken mit der Begrenzungsdiode D1 vor Überspannungen und Überströmen, bewirkt andererseits aber, dass dem Zweidrahtsensor S stets eine genügend hohe Versorgungsspannung zur Verfügung steht.

In der Figur 2 ist ein Schaltbild eines zweiten Ausführungsbeispieles der Erfindung gezeigt.

Der eine Pol einer Versorgungsspannungquelle U ist über eine Reihenschaltung aus einem Stromfühlwiderstand R2 und einem Strombegrenzungswiderstand R1, die in einer Verbindungsleitung V1 liegen, mit dem einen Anschluss eines Zweidrahtsensors S verbunden, dessen anderer Anschluss über eine Verbindungsleitung V2 mit dem anderen Pol der Versorgungsquelle U verbunden ist. Der eine Pol der Versorgungsspannungsquelle U ist über eine Reihenschaltung aus einer Diode D2 und einem Widerstand R6 mit dem anderen Pol der Versorgungsspannungsquelle U verbunden. Ausserdem ist der eine Pol der Versorgungsspannungsquelle U über einen Widerstand R3 mit der Drain-Elektrode eines Feldeffekttransistors T1 verbunden, dessen Source-Elektrode mit der Verbindungsleitung V2 und desse Gate-Elektrode mit dem Ausgang eines Operationsverstärkers OP verbunden ist. Der invertierende Eingang des Operationsverstärkers OP ist über einen Widerstand R5 mit dem gemeinsamen Knoten der Diode D2 und des Widerstandes R6 verbunden und über einen Widerstand R4 mit der Drain-Elektrode des Feldeffekttransistors T1 verbunden. Der nicht invertierende Eingang des Operationsverstärkers OP ist mit dem gemeinsamen Knoten des Stromfühlwiderstandes R2 und des Strombegrenzungswiderstandes R1 verbunden. Parallel zur Reihenschaltung aus dem Strombegrenzungswiderstand R1 und dem Zweidrahtsensor S liegt eine Begrenzungsdiode D1.

Der Operationsverstärker OP, der Feldeffekttransistor T1, die Widerstände R3 bis R6 sowie die Diode D2 stellen einen Stromregler SR dar.

Der vom Strom I1 am Stromfühlwiderstand R2 verursachte Spannungsabfall wird vom Operationsverstärker OP erfasst, der den Parallelstrom I2 entsprechend dem Verhältnis des Widerstandes R3 zum Stromfühlwiderstand R2 regelt. Durch geeignete Wahl der Diode D2 im Verhältnis zum Stromfühlwiderstand R2 läßt sich einstellen, bei welchem Strom I1 die Regelung einsetzt und der Parallelstrom I2 zu fließen beginnt. Damit ist gewährleistet, dass auch bei einem Gesamtstrom IO von 4 mA dem Zweidrahtsensor S immer genügend Leistung zur Verfügung steht.

Die Erfindung ist insbesondere für Zweidrahtsensoren geeignet, die mit einer HART®-Schnittstelle ausgestattet und in explosionsgefährdeten Bereichen eingesetzt werden.

### Bezugszeichenliste

- D1: Begrenzungsdiode
- D2: Diode
- I: Parallelstrom
- I2: Parallelstrom
- I0: Summenstrom
- OP: Operationsverstärker
- R1: Strombegrenzungswiderstand
- R2: Stromfühlwiderstand
- R3 - R6: Widerstand
- RH: HART®-Widerstand
- S: Zweidrahtsensor
- SR: Stromregler
- T1: Feldeffekttransistor
- U: Versorgungsspannungsquelle
- V1: Verbindungsleitung
- V2: Verbindungsleitung

## Patentansprüche

1. Schaltungsanordnung zur Spannungsversorgung eines Zweidrahtsensors (S), der über eine erste Verbindungsleitung (V1), in der ein Strombegrenzungswiderstand (R1) liegt, an den einen Pol und über eine zweite Verbindungsleitung (V2) an den anderen Pol einer Versorgungsspannungsquelle (U) angeschlossen ist, wobei parallel zum Zweidrahtsensor (S) und dem Strombegrenzungswiderstand (R1) mindestens eine Begrenzungsdiode (D1) liegt,
**dadurch gekennzeichnet, dass** die beiden Pole der Versorgungsspannungsquelle (U) über einen Stromregler (SR) mit einander verbunden sind und dass in einer der beiden Verbindungsleitungen (V1) ein Stromfühler (R1, R2) liegt, dessen Anschlüsse mit den Stelleingängen des Stromreglers (SR) verbunden sind.

2. Schaltungsanordnung nach Anspruch 1,
**dadurch gekennzeichnet, dass** der Strombegrenzungswiderstand (R1) auch als Stromfühler vorgesehen ist.

3. Schaltungsanordnung nach Anspruch 1,
**dadurch gekennzeichnet, dass** ein Stromfühlwiderstand (R2) als Stromfühler vorgesehen ist.

4. Schaltungsanordnung nach Anspruch 3,
**dadurch gekennzeichnet, dass** der eine Pol der Versorgungsspannungsquelle (U) über die eine Verbindungsleitung (V1), in der eine Reihenschaltung aus dem Stromfühlwiderstand (R2) und dem Strombegrenzungswiderstand (R1) liegt, mit dem einen Anschluß des Zweidrahtsensors verbunden ist, dessen anderer Anschluß über die andere Verbindungsleitung (V2) mit dem anderen Pol der Versorgungsspannungsquelle (U) verbunden ist, dass der eine Pol der Versorgungsspannungsquelle (U) über eine Reihenschaltung aus einer Diode (D2) und einem ersten Widerstand (R6) mit dem anderen Pol der Versorgungsspannungsquelle (U) verbunden ist, dass der eine Pol der Versorgungsspannungsquelle (U) über einen zweiten Widerstand (R3) mit der Drain-Elektrode eines Feldeffekttransistors (T1) verbunden ist, dessen Source-Elektrode mit der zweiten Verbindungsleitung (V2) verbunden ist, dass der gemeinsame Knoten der Diode (D2) und des ersten Widerstandes (R6) über einen dritten Widerstand (R5) sowie die Drain-Elektrode des Feldeffekttransistors (T1) über einen vierten Widerstand (R4) mit dem invertierenden Eingang eines Operationsverstärkers (OP) verbunden sind, dessen nichtinvertierender Eingang mit dem gemeinsamen Knoten des Strombegrenzungswiderstandes (R1) und des Stromfühlwiderstandes (R2) verbunden ist und dessen Ausgang an die Gate-Elektrode des Feldeffekttransistors (T1) angeschlossen ist.

5. Schaltungsanordnung nach einem der vorangehenden Ansprüche 1 bis 4,
**dadurch gekennzeichnet, dass** der Zweidrahtsensor (S) mit einer HART®-Schnittstelle ausgerüstet ist und dass in einer der beiden Verbindungsleitungen (V1) ein HART®-Widerstand (RH) liegt.

6. Schaltungsanordnung nach Anspruch 1, 2, 3, 4 oder 5,
**dadurch gekennzeichnet, dass** parallel zur Reihenschaltung aus dem Strombegrenzungswiderstand (R1) und dem Zweidrahtsensor (S) eine Reihenschaltung aus mehreren Begrenzungsdioden liegt.

7. Schaltungsanordnung nach Anspruch 6,
**dadurch gekennzeichnet, dass** mindestens zwei Reihenschaltungen aus mehreren Begrenzungsdioden zueinander parallel geschaltet sind.
